# EUROPÄISCHE PATENTSCHRIFT

(11) **EP 2 164 729 B1**
(45) Veröffentlichungstag und Bekanntmachung des Hinweises auf die Patenterteilung: **13.07.2011**
(21) Anmeldenummer: 08759718.3
(22) Anmeldetag: 19.05.2008
(51) Int. Cl.: B60T 1/087, F16D 57/04

(54) **HYDRODYNAMISCHER RETARDER**
HYDRODYNAMIC RETARDER
RALENTISSEUR HYDRODYNAMIQUE

(30) Priorität: 01.06.2007 DE 102007025676
(43) Veröffentlichungstag der Anmeldung: 24.03.2010
(73) Patentinhaber: ZF Friedrichshafen AG, 88038 Friedrichshafen (DE)
(72) Erfinder: SELINKA, Christian, 97490 Poppenhausen (DE); MAYER-JABS, Reinhold, 88250 Weingarten (DE); MEID, Thomas, 88693 Deggenhausertal (DE); HUHN, Dirk, 88048 Friedrichshafen (DE); PTOCK, Michael, 97453 Schonungen-Waldsachsen (DE); HUBER, Michael, 88085 Langenargen (DE)
(86) Internationale Anmeldenummer: PCT/EP2008/056089
(87) Internationale Veröffentlichungsnummer: WO 2008/145548

(56) Entgegenhaltungen:
- EP-B- 1 305 535
- DE-A1- 19 807 280
- GB-A- 1 326 500
- GB-A- 1 391 517
- US-A- 3 476 219

## Beschreibung

Die Erfindung betrifft einen hydrodynamischen Retarder gemäß dem Oberbegriff des Anspruches 1.

Durch die GB 1 326 500 A ist ein hydrodynamischer Retarder mit einem ersten Schaufelrad, wirksam als Rotorschaufelrad, und mit einem hierzu konzentrischen zweiten Schaufelrad, wirksam als Statorschaufelrad, bekannt. Die beiden Schaufelräder bilden gemeinsam einen hydrodynamischen Kreis, und sind um eine gemeinsame Drehachse gruppiert, wobei jedes Schaufelrad aus jeweils einem Grundkörper und einer an diesem festen Beschaufelung mit einer Mehrzahl von Schaufeln besteht. Die Versorgung des hydrodynamischen Kreises erfolgt mittels einer Fluidzufuhr, während die Fluidabführung aus dem hydrodynamischen Kreis mittels eines Fluidauslasses erfolgt. Während die Fluidzufuhr gemäß Fig. 3 zumindest im wesentlichen krümmungsfrei in den Retarder geführt ist, verfügt der Fluidauslass über eine eine tangentiale Fluidströmung ermöglichende Auslaßspirale. Mittels dieser Auslaßspirale ist der hydrodynamische Kreis auch mit frischem Fluid versorgbar, indem dieses Fluid, das der Auslaßspirale von einer Förderpumpe über ein Regelventil zugeführt wird, über die Auslaßspirale zu einem Kühler geleitet wird, der über ein Abschaltventil mit der Fluidzufuhr am Retarder verbunden ist. Diese Fluidzufuhr befindet sich im radial inneren Bereich der Schaufelräder, während die Auslaßspirale radial außerhalb der Schaufelräder vorgesehen ist.

Mit der vorgesehenen, im wesentlichen krümmungsfreien Fluidzufuhr erfolgt die Einleitung des Fluids in den hydrodynamischen Kreis mit hoher Geschwindigkeit, so dass Kavitation nicht auszuschließen ist, was insbesondere an der Beschaufelung des Statorschaufelrades zu Schäden führen kann.

Durch die EP 1 305 535 B1 ist ein weiterer hydrodynamischer Retarder mit einem ersten Schaufelrad, wirksam als Rotorschaufelrad, und mit einem hierzu konzentrischen zweiten Schaufelrad, wirksam als Statorschaufelrad, bekannt. Diese beiden Schaufelräder bilden gemeinsam einen hydrodynamischen Kreis und sind um eine gemeinsame Drehachse gruppiert, wobei jedes Schaufelrad aus jeweils einem Grundkörper und einer an diesem festen Beschaufelung mit einer Mehrzahl von Schaufeln besteht. Die Versorgung des hydrodynamischen Kreises erfolgt mittels einer Fluidzufuhr sowie die Fluidabführung aus dem hydrodynamischen Kreis mittels eines Fluidauslasses.

Auch bei diesem Retarder stellt sich das Problem, dass aufgrund einer mit hoher Geschwindigkeit erfolgenden Einführung frischen Fluides in den hydrodynamischen Kreis Kavitation auftreten kann, was insbesondere an der Beschaufelung des Statorschaufelrades Schäden bewirken kann. Aus diesem Grund sind am Statorschaufelrad ausschließlich Schaufeln vorgesehen, die im radial äußeren Bereich gegenüber der dem Rotorschaufelrad zugewandten Strömungskante über eine Anschrägung verfügen. Allerdings wird durch diese Lösung lediglich die Auswirkung der Kavitation begrenzt, nicht aber deren Auftreten entgegen gewirkt.

Der Erfindung liegt die Aufgabe zugrunde, die Fluidzufuhr bei einem hydrodynamischen Retarder derart auszubilden, dass eine kavitationsbedingte Schädigung der Beschaufelung zumindest eines Schaufelrades zumindest weitgehend vermeidbar ist.

Diese Aufgabe wird erfindungsgemäß durch die im Kennzeichen des Anspruches 1 angegebenen Merkmale gelöst.

Durch Ausbildung der Fluidzufuhr mit einer Einlaßspirale wird das Fluid unmittelbar vor Einleitung in den hydrodynamischen Kreis in im wesentlichen tangentialer Richtung strömen. Dieser Strömungsrichtung wird allerdings, bedingt durch die der Einlaßspirale zugeordnete Strömungsführung, eine Strömungsrichtung überlagert, die zumindest über eine Axialkomponente verfügt. Auf diese Weise gelangt das Fluid mit vergleichsweise geringer Strömungsgeschwindigkeit in den hydrodynamischen Kreis.

Der Austritt von Fluid erfolgt ebenfalls zumindest im wesentlichen tangential, und zwar mittels einer Auslaßspirale. Diese befindet sich radial außerhalb des hydrodynamischen Kreises, während die Einlaßspirale radial innerhalb des hydrodynamischen Kreises vorgesehen ist.

Mit Vorzug ist die Strömungsführung als Axialvorsprung am Grundkörper eines Schaufelrades, bevorzugt des Statorschaufelrades, vorgesehen, und ragt über die Außenkontur dieses Schaufelrades in Richtung zum anderen Schaufelrad, wie dem Rotorschaufelrad, hinaus. Damit wird das Fluid weit an den am stärksten gefährdeten Schaufeln des Statorschaufelrades vorbei in den hydrodynamischen Kreis geführt, und vermag somit keine kavitationsbedingte Schädigung zu entfalten. Durch entsprechende Ausformung der Strömungsführung kann dem Fluid zudem eine Bewegungskomponente in Radialrichtung überlagert werden, so dass es ohne starke Umlenkungen und damit im wesentlichen laminar in den hydrodynamischen Kreis eintreten kann.

Konkret als in Richtung zum anderen Schaufelrad vortretender Axialvorsprung am Statorschaufelrad ausgebildet, kann die Strömungsführung in die Außenkontur des anderen Schaufelrades, also des Rotorschaufelrades, eindringen. Aus diesem Grund ist das letztgenannte mit einer Rücknahme ausgebildet, und zwar bevorzugt im Bereich der Beschaufelung, da sich hierdurch eine Einleitung der laminaren Strömung unmittelbar in die Beschaufelung dieses Laufrades und damit in den hydrodynamischen Kreis ergibt.

Die Erfindung ist anhand eines Ausführungsbeispieles näher erläutert. Es zeigt:

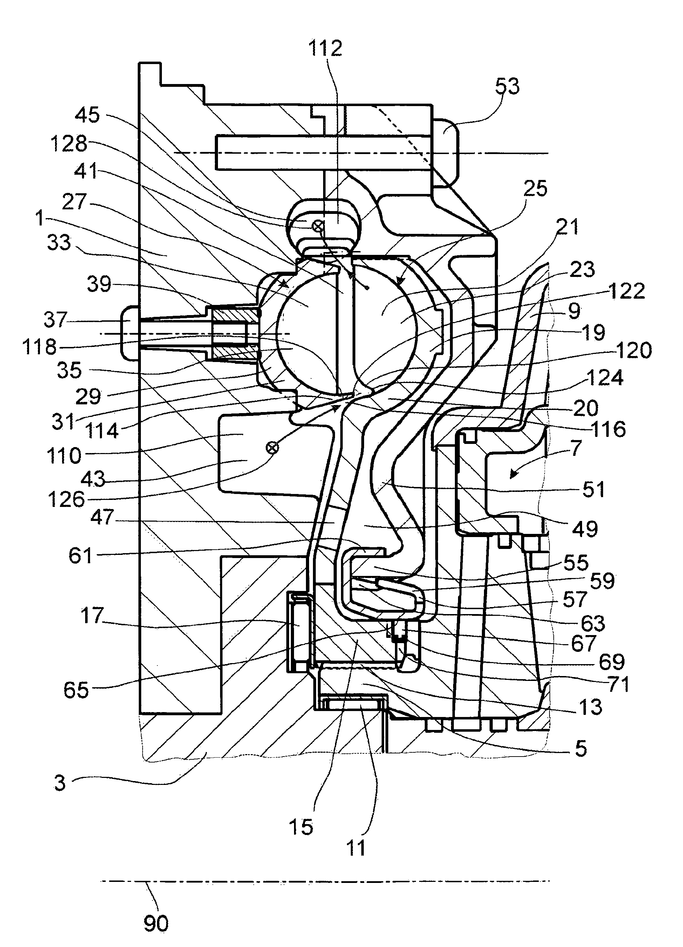

- Fig. 1: Die obere Hälfte eines Längsschnittes durch einen hydrodynamischen Retarder mit einem Rotor- und einem Statorschaufelrad.

Fig. 1 zeigt einen hydrodynamischen Retarder, der gegenüber einer Achse 90 zentriert ist. Der Retarder verfügt über einen in einem nicht gezeigten

Getriebegehäuse drehfesten Retarderträger 1, der ein ebenfalls drehfestes Stützelement 3 radial umschließt. Das Stützelement 3 ist, unter Zwischenschaltung einer Radiallagerung 11, ebenfalls umschlossen, und zwar von einer Kupplungsnabe 5 einer Kupplungseinheit 7, die über ein Kupplungsgehäuse 9 verfügt und in nicht gezeigter Weise mit einer ebenfalls nicht gezeigten Getriebeeingangswelle in drehfester Verbindung steht. Aufgrund dieser Verbindung nimmt die Kupplungseinheit 7 und damit das Kupplungsgehäuse 9 an einer Drehbewegung der Getriebeeingangswelle teil.

Zurückkommend auf die Kupplungsnabe 5 der Kupplungseinheit 7, steht diese über eine Verzahnung 13 mit einer Rotornabe 15 des Retarders in Eingriff, wobei sich die Rotornabe 15 an ihrer der Kupplungseinheit 7 abgewandten Seite über eine Axiallagerung 17 am Stützelement 3 axial abstützt. Die Rotornabe 15 ist an einem als Rotorschale 20 dienenden Grundkörper 19 befestigt, der sich, ausgehend von der Rotornabe 15, nach radial außen erstreckt und im radial äußeren Bereich eine Beschaufelung 21 mit einer Mehrzahl von Schaufeln 23 zur Bildung eines ersten Schaufelrades in Form eines Rotorschaufelrades 25 aufnimmt. Das Rotorschaufelrad 25 wirkt mit einem zweiten Schaufelrad in Form eines Statorschaufelrades 27 des Retarders zusammen, das ebenfalls über einen Grundkörper 29 verfügt, der als Statorschale 31 wirksam ist und zur Aufnahme einer Beschaufelung 33 mit Schaufeln 35 dient. An der Statorschale 31 sind an deren vom Rotorschaufelrad 25 abgewandten Seite über den Umfang verteilt Gewindehülsen 39 vorgesehen, in die jeweils ein Befestigungselement 37 einbringbar ist, wobei durch die Befestigungselemente 37 in Verbindung mit den Gewindehülsen 39 das Statorschaufelrad 27 am Retarderträger 1 befestigt ist.

Das Rotorschaufelrad 25 bildet zusammen mit dem Statorschaufelrad 27 einen hydrodynamischen Kreis 41, der mit viskosem Medium zumindest teilweise befüllt ist. Der Füllungsgrad des hydrodynamischen Kreises 41 kann mittels einer Fluidzufuhr 43 erhöht werden, während über einen Fluidauslass 45 viskoses Medium aus dem hydrodynamischen Kreis 41 entzogen werden kann. In bekannter Weise kann über den Befüllungsgrad des hydrodynamischen Kreises 41 dessen Momentenübertragbarkeit und damit die durch den Retarder ausgelöste Bremswirkung eingestellt werden. Die Fluidzufuhr 43 dient somit im Zusammenhang mit dem Fluidauslass 45 zur Regelung des Retarders.

Die Fluidzufuhr 43 ist radial innerhalb des hydrodynamischen Kreises 41 vorgesehen, und in Form einer Einlaßspirale 110 ausgebildet. In dieser Einlaßspirale 110 wird das durch die Fluidzufuhr 43 eingeleitete Fluid in eine Fluidströmung 126 versetzt, die in Umfangsrichtung fließt, wie durch den mit der Bezugsziffer 126 benannten Strömungspfeil angedeutet werden soll. Durch einen am Grundkörper 31 des Statorschaufelrades 27 radial innen vorgesehenen, gegenüber der Außenkontur des Statorschaufelrades 27 in Richtung zum Rotorschaufelrad 25 überstehenden Axialvorsprung 118 wird dem Statorschaufelrad 27 eine Strömungsführung 114 zugeordnet, durch welche der in der Einlaßspirale 110 im wesentlichen tangential ankommenden Fluidströmung 126 eine Bewegungskomponente in Radialrichtung überlagert wird. Die Fluidströmung 126 wird somit unmittelbar in das Rotorschaufelrad 25 und damit in den hydrodynamischen Kreis 41 eingeleitet.

Um an dem Rotorschaufelrad 25 Raum zum Eindringen der Strömungsführung 114 zu schaffen, sind die Schaufeln 23 des Rotorschaufelrades 25 in demjenigen radialen Bereich, in welchem ein axial freies Ende 122 des Axialvorsprunges 118 der Strömungsführung 114 eintaucht, mit jeweils einer Rücknahme 124 ausgebildet. Durch die gesamte Beschaufelung 21 des Rotorschaufelrades 25 bildet sich somit eine Aussparung 120 für den Axialvorsprung 118 der Strömungsführung 114.

Zwischen der Rotorschale 20 des Rotorschaufelrades 25 und dem axial freien Ende 122 des Axialvorsprunges 118 bildet sich ein Strömungsweg 116 für die Fluidströmung 126 zum Eintritt derselben in den hydrodynamischen Kreis 41. Dieser Strömungsweg 116 kann bis auf Spaltbreite verengt sein.

Fluid, das den hydrodynamischen Kreis 41 verlassen soll, tritt in eine radial außerhalb des hydrodynamischen Kreises 41 vorgesehene Auslaßspirale 112 ein, die dem Fluidauslaß 45 zugeordnet ist. Das aus dem hydrodynamischen Kreis 41 abgeleitete Fluid führt hierbei eine Fluidströmung 128 in Umfangsrichtung durch, wie durch den mit der Bezugsziffer 128 benannten Strömungspfeil angedeutet werden soll. Das Fluid strömt somit innerhalb der Auslaßspirale 112 zumindest im wesentlichen tangential zum hydrodynamischen Kreis 41.

Zurückkommend auf den Grundkörper 19 des Rotorschaufelrades 25, ist in diesem ein Druckausgleich 47 in Form zumindest einer Durchgangsbohrung ausgebildet. Durch diesen Druckausgleich 47 wird der hydrodynamische Kreis 41 mit einem Ausgleichsraum 49 verbunden, der sich axial zwischen dem Grundkörper 19 des Rotorschaufelrades 25 und einem Dichtflansch 51 befindet, der über Befestigungselemente 53 am Retarderträger 1 befestigt ist. Bevor eingehend auf die konstruktive Ausführung dieses Dichtflansches 51 hingewiesen wird, sei kurz die Funktion des Ausgleichsraumes 49 erläutert, der aufgrund des Druckausgleiches 47 über ähnliche Druckbedingungen wie der hydrodynamische Kreis 41 verfügt und somit eine starke einseitige Belastung des Grundkörpers 19 des Rotorschaufelrades 25 von der Seite des hydrodynamischen Kreises 41 aus verhindert.

Der Dichtflansch 51 weist im radial inneren Bereich einen im Wesentlichen auf das Rotorschaufelrad 25 zugerichteten, sich axial erstreckenden Aufnahmevorsprung 55 auf, an welchem eine Ringfederdichtung 57 vorgesehen ist. Diese hintergreift mit einem ersten Schenkel 59 eine am Aufnahmevorsprung 55 vorgesehene Radialnase 63 und umgreift mit einem zweiten Schenkel 61 die radiale Gegenseite des Aufnahmevorsprunges 55. Derart sowohl axial als auch radial am Dichtflansch 51 aufgenommen, belastet die Ringfederdichtung 57 mit einer Bodenfläche 65 die Kupplungsnabe 5. Um an dieser Kontaktstelle zwischen dem ortsfesten Dichtflansch 51 und der rotierenden Kupplungseinheit 7 eine hinreichende Dichtung zu gewährleisten, ist in einer Nutung 69 der Kupplungsnabe 5 ein Dichtring 67 eingesetzt, der vorzugsweise ebenso wie die Nutung 69 von rechteckigem Querschnitt ist. Der Dichtring 67 besteht bevorzugt aus Grauguss, ist aber alternativ auch aus einem elastomeren Werkstoff herstellbar. Dem Dichtring ist eine in der Kupplungsnabe 5 ausgebildete, im Wesentlichen radial verlaufende Schmierbohrung 71 zugeordnet.

## Patentansprüche

1. Hydrodynamischer Retarder mit einem ersten Schaufelrad (25) und mit einem hierzu konzentrischen zweiten Schaufelrad (27), die gemeinsam einen hydrodynamischen Kreis bilden und um eine gemeinsame Drehachse (90) gruppiert sind, wobei jedes Schaufelrad (25, 27) aus jeweils einem Grundkörper (19, 29) und einer an diesem festen Beschaufelung (21, 33) mit einer Mehrzahl von Schaufeln (23, 35) besteht, und die Versorgung des hydrodynamischen Kreises (41) mittels einer Fluidzufuhr (43) sowie die Fluidabführung aus dem hydrodynamischen Kreis (41) mittels eines Fluidauslasses (45) erfolgt, wobei der Fluidauslass (45) über eine eine tangentiale Fluidströmung (128) ermöglichende Auslaßspirale (112) verfügt, die sich radial außerhalb des hydrodynamischen Kreises (41) befindet,
**dadurch gekennzeichnet,**
**dass** die Fluidzufuhr (43) über eine eine tangentiale Fluidströmung (126) ermöglichende Einlaßspirale (110) verfügt, welcher eine das Fluid mit zumindest einer Axialkomponente in den hydrodynamischen Kreis (41) einleitende Strömungsführung (114) zugeordnet ist, wobei die Einlaßspirale (110) sich radial innerhalb des hydrodynamischen Kreises (41) befindet.

2. Hydrodynamischer Retarder nach Anspruch 1,
**dadurch gekennzeichnet,**
**dass** die Strömungsführung (114) als Axialvorsprung (118) am Grundkörper (29) eines Schaufelrades (27) vorgesehen ist und, über die Außenkontur dieses Schaufelrades (27), in Richtung zum anderen Schaufelrad (25) hinausragend, in eine Aussparung (120) dieses anderen Schaufelrades (25) eingreift.

3. Hydrodynamischer Retarder nach Anspruch 2,
**dadurch gekennzeichnet,**
**dass** die Strömungsführung (114) am Grundkörper (29) des Statorschaufelrades (27) vorgesehen ist und, über die Außenkontur desselben in Richtung zum Rotorschaufelrad (25) hinausragend, in eine Aussparung (120) des Rotorschaufelrades (25) eingreift.

4. Hydrodynamischer Retarder nach Anspruch 2 oder 3,
**dadurch gekennzeichnet,**
**dass** der Axialvorsprung (118) des betreffenden Schaufelrades (27) an der radialen Innenseite des Grundkörpers (29) dieses Schaufelrades (27) vorgesehen ist, und mit einem axial freien Ende (122) zur Bildung des Strömungsweges (116) an eine Schale (20) des anderen Schaufelrades (25) angenähert ist.

5. Hydrodynamischer Retarder nach Anspruch 4,
**dadurch gekennzeichnet,**
**dass** der Axialvorsprung (118) der Strömungsführung (114) am Grundkörper (29) des betreffenden Schaufelrades (27) mit einer Komponente in Radialrichtung verlauft und hierdurch der von der Einlaßspirale (110) kommenden Fluidströmung (126) eine Bewegungskomponente in Radialrichtung zu überlagern

6. Hydrodynamischer Retarder nach Anspruch 3, 4 oder 5,
**dadurch gekennzeichnet,**
**dass** die Beschaufelung (21) des anderen Schaufelrades (25), bevorzugt des Rotorschaufelrades, im radialen Erstreckungsbereich des axial freien Endes (122) des Axialvorsprunges (118) mit einer die Aussparung (120) bildenden Rücknahme (124) in den einzelnen Schaufeln (23) versehen ist.

## Claims

1. Hydrodynamic retarder, with a first vane wheel (25) and with a second vane wheel (27) concentric thereto, which together form a hydrodynamic circuit and are grouped around a common axis of rotation (90), each vane wheel (25, 27) consisting in each case of a basic body (19, 29) and of vaning (21, 33) fixed to the latter and having a plurality of vanes (23, 35), and the feed of the hydrodynamic circuit (41) taking place by means of a fluid supply (43) and fluid discharge from the hydrodynamic circuit (41) taking place by means of a fluid out (45), the fluid out (45) having an outlet spiral (112) which allows a tangential fluid flow (128) and is located radially outside the hydrodynamic circuit (41), **characterized in that** the fluid supply (43) has an inlet spiral (110) which allows a tangential fluid flow (126) and which is assigned a flow guide (114) introducing the fluid with at least one axial component into the hydrodynamic circuit (41), the inlet spiral (110) being located radially inside the hydrodynamic circuit (41).

2. Hydrodynamic retarder according to Claim 1, **characterized in that** the flow guide (114) is provided as an axial projection (118) on the basic body (29) of the vane wheel (27) and, projecting in the direction of the other vane wheel (25), engages via the outer contour of the vane wheel (27) into a clearance (120) of this other vane wheel (25).

3. Hydrodynamic retarder according to Claim 2, **characterized in that** the flow guide (114) is provided on the basic body (29) of the stator vane wheel (27) and, projecting in the direction of the rotor vane wheel (25), engages via the outer contour of the stator vane wheel (27) into a clearance (120) of the rotor vane wheel (25).

4. Hydrodynamic retarder according to Claim 2 or 3, **characterized in that** the axial projection (118) of the expected vane wheel (27) is provided on the radial inside of the basic body (29) of this vane wheel (27) and with an axially free end (122) approaches a shell (20) of the other vane wheel (25) so as to form the flow path (116).

5. Hydrodynamic retarder according to Claim 4, **characterized in that** the axial projection (118) of the flow guide (114) of the basic body (29) of the respective vane wheel (27) runs with a component in the radial direction and thereby superposes a movement component in the radial direction upon the fluid flow (126) coming from the inlet spiral (110).

6. **Hydrodynamic retarder according to Claim 3, 4 or 5 characterized in that** the vaning (21) of the other vane wheel (25), preferably of the rotor vane wheel, is provided, in the radial region of extent of the axially free end (122) of the axial projection (118), with a setback (124) in the individual vanes (23) which forms the clearance (120).

## Revendications

1. Ralentisseur hydrodynamique comprenant une première roue à aubes (25) et une deuxième roue à aubes (27) concentrique à celle-ci, qui forment conjointement un circuit hydrodynamique et qui sont groupées autour d'un axe de rotation commun (90), chaque roue à aubes (25, 27) se composant à chaque fois d'un corps de base (19, 29) et d'un aubage (21, 33) fixé sur celui-ci, avec une pluralité d'aubes (23, 35), et l'alimentation du circuit hydrodynamique (41) s'effectuant au moyen d'un apport de fluide (43), et l'évacuation de fluide hors du circuit hydrodynamique (41) s'effectuant au moyen d'une sortie de fluide (45), la sortie de fluide (45) disposant d'une spirale de sortie (112) permettant un écoulement fluidique tangentiel (128), laquelle se situe radialement en dehors du circuit hydrodynamique (41),
**caractérisé en ce que**
l'apport de fluide (43) dispose d'une spirale d'entrée (110) permettant un écoulement de fluide tangentiel (126), à laquelle est associé un guidage d'écoulement (114) introduisant le fluide avec au moins une composante axiale dans le circuit hydrodynamique (41), la spirale d'entrée (110) se trouvant radialement à l'intérieur du circuit hydrodynamique (41).

2. Ralentisseur hydrodynamique selon la revendication 1,
**caractérisé en ce que**
le guidage d'écoulement (114) est prévu sous forme de saillie axiale (118) sur le corps de base (29) d'une roue à aubes (27), et, par le biais du contour extérieur de cette roue à aubes (27), vient en prise, en saillant dans la direction de l'autre roue à aubes (25), dans un évidement (120) de cette autre roue à aubes (25).

3. Ralentisseur hydrodynamique selon la revendication 2,
**caractérisé en ce que**
le guidage d'écoulement (114) est prévu sur le corps de base (29) de la roue à aubes du stator (27), et, par le biais du contour extérieur de celle ci, vient en prise, en saillant dans la direction de la roue à aubes du rotor (25), dans un évidement (120) de la roue à aubes du rotor (25) .

4. Ralentisseur hydrodynamique selon la revendication 2 ou 3,
**caractérisé en ce que**
la saillie axiale (118) de la roue à aubes concernée (27) est prévue sur le côté interne radial du corps de base (29) de cette roue à aubes (27), et est rapprochée avec une extrémité libre axialement (122) d'une coque (20) de l'autre roue à aubes (25) pour former la voie d'écoulement (116) .

5. Ralentisseur hydrodynamique selon la revendication 4,
**caractérisé en ce que**
la saillie axiale (118) du guidage d'écoulement (114) s'étend sur le corps de base (29) de la roue à aubes concernée (27) avec une composante dans la direction radiale et pour superposer ainsi à l'écoulement fluidique (126) venant de la spirale d'entrée (110) une composante de déplacement dans la direction radiale.

6. Ralentisseur hydrodynamique selon la revendication 3, 4 ou 5,
**caractérisé en ce que**
l'aubage (21) de l'autre roue à aubes (25), de préférence de la roue à aubes du rotor, est pourvu dans la région d'étendue radiale de l'extrémité libre axialement (122) de la saillie axiale (118) d'un rentré (124) dans les aubes individuelles (23) formant l'évidement (120).
